(19) Europäisches Patentamt
European Patent Office
Office européen des brevets

(11) **EP 4 636 684 A1**

(12) **EUROPEAN PATENT APPLICATION**

(43) Date of publication:
**22.10.2025 Bulletin 2025/43**

(21) Application number: **24315188.3**

(22) Date of filing: **17.04.2024**

(51) International Patent Classification (IPC):
**G06T 5/90** (2024.01)      **G06T 5/60** (2024.01)

(52) Cooperative Patent Classification (CPC):
**G06T 5/60; G06T 5/92;** G06T 2207/20081;
G06T 2207/20084; G06T 2207/20208

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventor: **Lopez, Patrick
35450 Livre sur Changeon (FR)**

(74) Representative: **Interdigital
Immeuble ZEN 2
845 A, avenue des Champs Blancs
35510 Cesson-Sévigné (FR)**

(54) **LOW COMPLEXITY DEEP NEURAL NETWORK USING HYBRID DATA FOR INVERSE TONE MAPPED IMAGE GENERATION**

(57)    A method comprising:
obtaining (1330) a standard dynamic range (SDR) picture data; and,
applying (1331) a neural network implementing an inverse tone mapping process to the SDR picture data to obtain high dynamic range (HDR) picture data, wherein the neural network comprises a concatenation of an array of samples representing the SDR picture data to an array of samples representative of at least one statistical representation of the SDR picture data.

Fig. 5A

**Description**

1. TECHNICAL FIELD

At least one of the present embodiments generally relates to the field of generation of High Dynamic Range content and more particularly to a method and a device for applying an inverse tone mapping to a standard or medium dynamic range content to generate a HDR content.

2. BACKGROUND

Recent advancements in display technologies allow for an extended dynamic range of color, luminance and contrast in pictures to be displayed. The term *picture* refers here to a picture content that can be for example a video or a still picture or image.

A high dynamic range video (HDR video) describes a video having a dynamic range greater than that of standard dynamic range video (SDR video) or a medium dynamic range video (MDR video). HDR technology offers a better viewer experience (or Quality of Experience (QoE)) of video contents.

Since in the past, a majority of video contents were produced in SDR, in order to benefit of the improvements brought by the HDR technology while displaying these video contents, there is a need to transform these video contents from SDR to HDR. Methods allowing transforming a SDR content in a HDR content are generally called Inverse Tone Mapping (ITM) methods and use an inverse tone mapping operator (ITMO).

Most ITMO transform a sample of a SDR content into a sample of a HDR content using a mapping function (see document Y.Kinoshita. 2017. «Fast Inverse Tone Mapping with Reinhard's Global Operator.»).

In video production professional studios, the ITM is described by one dimensional (1D) or three dimensional (3D) LUTs, which can be static (as proposed in document *BBC. 2021. «Release Notes for HLG Format Conversion LUTs v1.5.»*) or dynamic (as proposed in the SL-HDR1 HDR distribution technology (ETSI TS 103 433-1) and in document WO2021175633A1).

Recently, deep neural network based ITMO have been proposed (see document Kinoshita, Y. 2019. «iTM-Net: Deep Inverse Tone Mapping Using Novel Loss Function Based on Tone Mapping Operator.» (called *Kinoshita19* in the following) or document Kim, Soo Ye. 2019. «Deep SR-ITM Joint Learning of Super-Resolution and Inverse Tone-Mapping for 4K UHD HDR Applications.»). Document Kinoshita19 shows that HDR pictures obtained using the deep neural network based ITMO have a higher quality than HDR pictures obtained applying traditional ITMO based on mapping functions. However, the complexity of these algorithms is quite high and their real-time implementation in products is questionable.

It is desirable to reduce the complexity of deep neural network based ITMO in order to render their adoption in replacement of the traditional mapping functions possible.

3. BRIEF SUMMARY

In a first aspect, one or more of the present embodiments provide a method comprising:

obtaining standard dynamic range (SDR) picture data; and,
applying a neural network implementing an inverse tone mapping process to the SDR picture data to obtain high dynamic range (HDR) picture data, wherein the neural network comprises a concatenation of an array of samples representing the SDR picture data to an array of samples representative of at least one statistical representation of the SDR picture data.

In an embodiment, the SDR picture data is a full SDR picture and the HDR picture data is a full HDR picture.
In a second aspect, one or more of the present embodiments provide a method comprising:

obtaining a couple of picture data comprising a standard dynamic range (SDR) version and a high dynamic range (HDR) version of same picture data;
applying a neural network implementing an inverse tone mapping process to the SDR version to obtain a prediction of the HDR version, the neural network comprising a concatenation of an array of samples representing the SDR version to an array of samples representative at least one statistical representation of the SDR version;
computing an error metric between the prediction of the HDR version and the HDR version; and
using the error metric in a back propagation process for updating parameters of the neural network.

In a third aspect, one or more of the present embodiments provide a method comprising:

obtaining a database of a plurality of couples of pictures, each couple of pictures comprising a standard dynamic range (SDR) version and a high dynamic range (HDR) version of a same picture;

dividing each picture of the database in blocks of samples to obtain a plurality of couples of a SDR version and a HDR version of a same block of samples; and,

applying iteratively the method of the second aspect to each couple of the plurality of couples of a SDR version and a HDR version of a same block of samples to determine the parameters of the neural network, the parameters of the neural network updated at an iteration being used for the next iteration.

In an embodiment, the computing of the error metric involves samples of a sub-part of the prediction of the HDR version and samples of a corresponding sub-part of the HDR version, each sub-part depending on characteristics of at least one among at least one convolution process and at least one sub-sampling process comprised in the neural network.

In an embodiment, the at least one statistical representation comprises a histogram of a SDR picture comprising the SDR picture data.

In a fourth aspect, one or more of the present embodiments provide a device comprising electronic circuitry configured for:

obtaining standard dynamic range (SDR) picture data; and,

applying a neural network implementing an inverse tone mapping process to the SDR picture data to obtain high dynamic range (HDR) picture data, wherein the neural network comprises a concatenation of an array of samples representing the SDR picture data to an array of samples representative of at least one statistical representation of the SDR picture data.

In an embodiment, the SDR picture data is a full SDR picture and the HDR picture data is a full HDR picture.

In a fifth aspect, one or more of the present embodiments provide a device comprising electronic circuitry configured for:

obtaining a couple of picture data comprising a standard dynamic range (SDR) version and a high dynamic range (HDR) version of same picture data;

applying a neural network implementing an inverse tone mapping process to the SDR version to obtain a prediction of the HDR version, the neural network comprising a concatenation of an array of samples representing the SDR version to an array of samples representative at least one statistical representation of the SDR version;

computing an error metric between the prediction of the HDR version and the HDR version; and

using the error metric in a back propagation process for updating parameters of the neural network.

In a sixth aspect, one or more of the present embodiments provide a device comprising electronic circuitry configured for:

obtaining a database of a plurality of couples of pictures, each couple of pictures comprising a standard dynamic range (SDR) version and a high dynamic range (HDR) version of a same picture;

dividing each picture of the database in blocks of samples to obtain a plurality of couples of a SDR version and a HDR version of a same block of samples; and;

applying an iterative process to the plurality of couples of a SDR version and a HDR version of a same block of samples to determine parameters of a neural network implementing an inverse tone mapping process, parameters of the neural network updated at an iteration being used for the next iteration, the iterative process comprising for a couple of the plurality of couples of a SDR version and a HDR version of a same block of samples in one iteration:

applying the neural network implementing the inverse tone mapping process to the SDR version of the couple to obtain a prediction of the HDR version of the couple, the neural network comprising a concatenation of an array of samples representing the SDR version of the couple to an array of samples representative at least one statistical representation of the SDR version of the couple;

computing an error metric between the prediction of the HDR version of the couple and the HDR version of the couple; and

using the error metric in a back propagation process for updating parameters of the neural network.

In an embodiment, the computing of the error metric involves samples of a sub-part of the prediction of the HDR version and samples of a corresponding sub-part of the HDR version, each sub-part depending on characteristics of at least one among at least one convolution process and at least one sub-sampling process comprised in the neural network.

In an embodiment, the at least one statistical representation comprises a histogram of a SDR picture comprising the SDR picture data.

In a seventh aspect, one or more of the present embodiments provide a non-transitory information storage medium storing program code instructions for implementing the method according to the first, second and third aspect.

In an eighth aspect, one or more of the present embodiments provide a computer program comprising program code instructions for implementing the method according to the first, second and third aspect.

## 4. BRIEF SUMMARY OF THE DRAWINGS

Fig. 1 illustrates schematically an example of context in which the various embodiments are implemented;

Fig. 2A illustrates schematically an example of hardware architecture of a processing module able to implement various embodiments;

Fig. 2B illustrates a block diagram of an example of a first system in which various aspects and embodiments are implemented;

Fig. 2C illustrates a block diagram of an example of a second system in which various aspects and embodiments are implemented;

Fig. 3 illustrates schematically an inverse tone mapping process for generating a HDR picture from a SDR picture based on a neural network;

Fig. 4 illustrates schematically a training process;

Fig. 5A illustrates schematically a neural network used for implementing an inverse tone mapping process;

Fig. 5B illustrates a block diagram of a process implementing the neural network implementing an inverse tone mapping process;

Fig. 6A illustrates schematically an influence of input samples over a $16\times16$ block of pixels; and,

Fig. 6B illustrates a processing of a block by the neural network implementing an inverse tone mapping process.

## 5. DETAILED DESCRIPTION

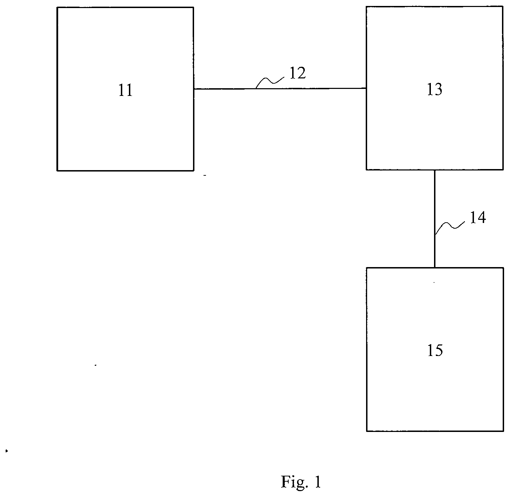

**Fig. 1** illustrates schematically a context in which embodiments are implemented.

In Fig. 1, a system 11, that could be a camera, a storage device, a computer, a server or any device capable of delivering a video stream (i.e., video data), transmits a video stream to a system 13 using a communication channel 12. The video stream is either encoded and transmitted by the system 11 or received and/or stored by the system 11 and then transmitted. The video stream represents for example a Standard Dynamic Range (SDR) content encoded using a compression method such as VVC (Versatile Video Coding (VVC), ITU-T H.266), HEVC (ISO/IEC 23008-2 - MPEG-H Part 2, High Efficiency Video Coding / ITU-T H.265)), AVC ((ISO/CEI 14496-10), EVC (Essential Video Coding/MPEG-5), AV1, AV2 and VP9 or JPEG.

The communication channel 12 is a wired (for example Internet or Ethernet) or a wireless (for example WiFi, 3G, 4G or 5G) network link.

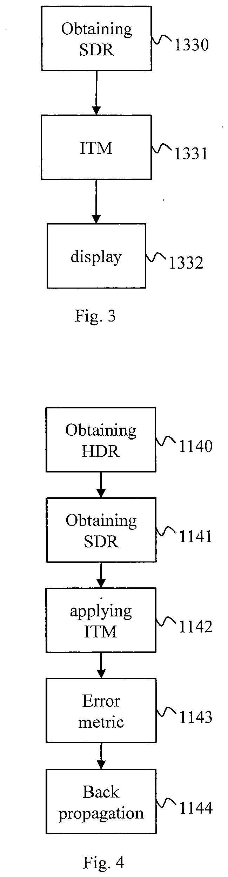

The system 13, that could be for example a set top box, receives and decodes the video stream to generate for example, the SDR content. From the SDR content, the system 13 generates a high Dynamic Range (HDR) content using a neural network (NN) based inverse tone mapping (ITM) method described later in relation to Figs. 3, 4, 5A, 5B, 6A, 6B.

The obtained HDR content is then transmitted to a display 15 using a communication channel 14, that could be a wired or wireless network. The display 15 then displays HDR content.

In an embodiment, the system 13 is comprised in the display 15. In that case, the system 13 and display 15 are comprised in a TV, a computer, a tablet, a smartphone, a head-mounted display, etc.

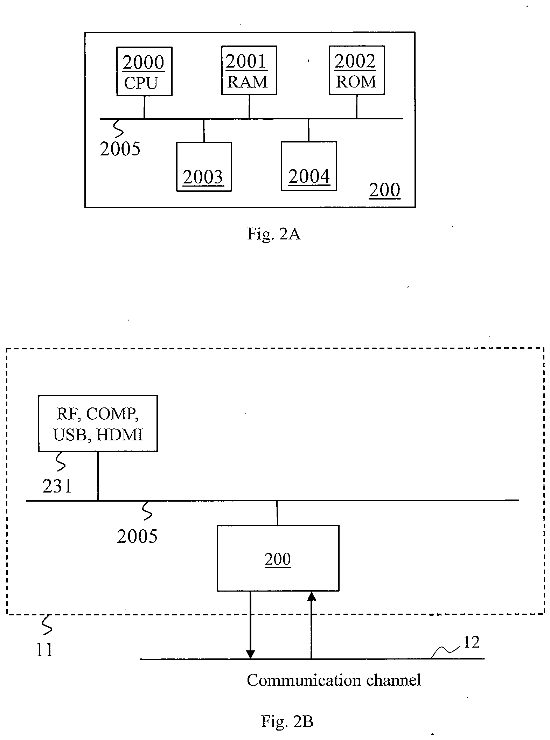

**Fig. 2A** illustrates schematically an example of hardware architecture of a processing module 200 used for instance in the system 11 or in the system 13. The processing module 200 comprises, connected by a communication bus 2005: a processor or CPU (central processing unit) 2000 encompassing one or more microprocessors, general purpose computers, special purpose computers, and processors based on a multi-core architecture, as non-limiting examples; a random access memory (RAM) 2001; a read only memory (ROM) 2002; a storage unit 2003, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive, or a storage medium reader, such as a SD (secure digital) card reader and/or a hard disc drive (HDD) and/or a network accessible storage device; at least one communication interface 2004 for exchanging data with other modules, devices, systems or equipment. The communication interface 2004 can include, but is not limited to, a transceiver configured to transmit and to receive data over the communication channel 12. The communication interface 2004 can include, but is not limited to, a modem or a network card.

For example, when implemented in the system 13, the communication interface 2004 enables for instance the processing module 200 to receive the SDR content and to output the HDR content.

The processor 2000 is capable of executing instructions loaded into the RAM 2001 from the ROM 2002, from an external memory (not shown), from a storage medium, or from a communication network. When the processing module 200 is powered up, the processor 2000 is capable of reading instructions from the RAM 2001 and executing them.

When the processing module 200 is comprised in the system 11, these instructions form a computer program causing, for example, the implementation by the processor 400 of a process of training parameters of a NN implementing an ITM process.

When the processing module 200 is comprised in the system 13, these instructions form a computer program causing, for example, the implementation by the processor 2000 of an NN based ITM process.

All or some of the algorithms and steps of the above processes may be implemented in software form by the execution of a set of instructions by a programmable machine such as a DSP (digital signal processor) or a microcontroller, or be implemented in hardware form by a machine or a dedicated component such as a FPGA (field-programmable gate array) or an ASIC (application-specific integrated circuit). Microprocessors, DSP, FPGA and ASIC are considered as electronic circuitry.

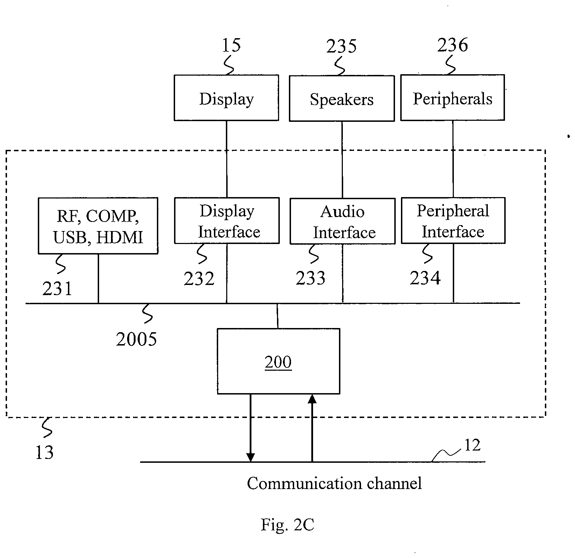

**Fig. 2C** illustrates a block diagram of an example of the system 13 in which various aspects and embodiments are implemented.

System 13 can be embodied as a device including various components or modules and is configured to generate a HDR content from a SDR content. Examples of such system include, but are not limited to, various electronic systems such as personal computers, laptop computers, smartphones, tablet, TV, or set top boxes. Components of system 13, singly or in combination, can be embodied in a single integrated circuit (IC), multiple ICs, and/or discrete components. For example, in at least one embodiment, the system 13 comprises at least one processing module 200 that implements an ITM module that implement the NN based ITM process. In various embodiments, the system 13 is communicatively coupled to one or more other systems, or other electronic devices, via, for example, a communication bus or through dedicated input and/or output ports.

The input to the processing module 200 can be provided through various input modules as indicated in a block 231. Such input modules include, but are not limited to, (i) a radio frequency (RF) module that receives an RF signal transmitted, for example, over the air by a broadcaster, (ii) a component (COMP) input module (or a set of COMP input modules), (iii) a Universal Serial Bus (USB) input module, and/or (iv) a High Definition Multimedia Interface (HDMI) input module. Other examples, not shown in FIG. 2C, include composite video.

In various embodiments, the input modules of block 231 have associated respective input processing elements as known in the art. For example, the RF module can be associated with elements suitable for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which can be referred to as a channel in certain embodiments, (iv) demodulating the down-converted and bandlimited signal, (v) performing error correction, and (vi) demultiplexing to select the desired stream of data packets. The RF module of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down-converting the received signal to a lower frequency (for example, an intermediate frequency or a near-baseband frequency) or to baseband. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF module includes an antenna.

Additionally, the USB and/or HDMI modules can include respective interface processors for connecting system 13 to other electronic devices across USB and/or HDMI connections. It is to be understood that various aspects of input processing, for example, Reed-Solomon error correction, can be implemented, for example, within a separate input processing IC or within the processing module 200 as necessary. Similarly, aspects of USB or HDMI interface processing can be implemented within separate interface ICs or within the processing module 200 as necessary. The demodulated, error corrected, and demultiplexed stream is provided to the processing module 200.

Various elements of system 13 can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the system 13, the processing module 200 is interconnected to other elements of said system 13 by the bus 405.

The communication interface 2004 of the processing module 200 allows the system 13 to communicate on the communication channel 12. The communication channel 12 can be implemented, for example, within a wired and/or a wireless medium.

Data is streamed, or otherwise provided, to the system 13, in various embodiments, using a wireless network such as a Wi-Fi network, for example IEEE 802.11 (IEEE refers to the Institute of Electrical and Electronics Engineers). The Wi-Fi signal of these embodiments is received over the communications channel 12 and the communications interface 2004 which are adapted for Wi-Fi communications. The communications channel 12 of these embodiments is typically connected to an access point or router that provides access to external networks including the Internet for allowing streaming applications and other over-the-top communications. Still other embodiments provide streamed data to the system 13 using the RF connection of the input block 231. As indicated above, various embodiments provide data in a non-streaming manner, for example, when the system 13 is a smartphone or a tablet. Additionally, various embodiments use wireless networks other than Wi-Fi, for example a cellular network or a Bluetooth network.

The system 13 can provide an output signal to various output devices using the communication channel 12 or the bus 2005. For example, the system 13 can provide a an HDR content.

The system 13 can provide an output signal to various output devices, including the display 15, speakers 235, and other peripheral devices 236. The display 15 of various embodiments includes one or more of, for example, a touchscreen display, an organic light-emitting diode (OLED) display, a curved display, and/or a foldable display. The display 15 can be for a television, a tablet, a laptop, a cell phone (mobile phone), or other devices. The HDR display 15 can also be integrated with other components (for example, as in a smart phone), or separate (for example, an external monitor for a laptop). The other peripheral devices 236 include, in various examples of embodiments, one or more of a stand-alone digital video disc (or digital versatile disc) (DVR, for both terms), a disk player, a stereo system, and/or a lighting system. Various embodiments use one or more peripheral devices 236 that provide a function based on the output of the system 13. For example, a disk player performs the function of playing the output of the system 13.

In various embodiments, control signals are communicated between the system 13 and the display 15, speakers 235, or other peripheral devices 236 using signaling such as AV.Link, Consumer Electronics Control (CEC), or other communications protocols that enable device-to-device control with or without user intervention. The output devices can be communicatively coupled to system 13 via dedicated connections through respective interfaces 232, 233, and 234. Alternatively, the output devices can be connected to system 13 using the communication channel 12 via the communication interface 2004. The display 15 and speakers 235 can be integrated in a single unit with the other components of system 13 in an electronic device such as, for example, a television. In various embodiments, the display interface 232 includes a display driver, such as, for example, a timing controller (T Con) chip.

The display 15 and speakers 235 can alternatively be separate from one or more of the other components, for example, if the RF module of block 231 is part of a separate set-top box. In various embodiments in which the display 15 and speakers 235 are external components, the output signal can be provided via dedicated output connections, including, for example, HDMI ports, USB ports, or COMP outputs.

**Fig. 2B** illustrates a block diagram of an example of the system 11 in which various aspects and embodiments are implemented.

System 11 can be embodied as a device including the various components and modules described above and is configured to perform one or more of the aspects and embodiments described in this document.

Examples of such devices include, but are not limited to, various electronic devices such as personal computers, laptop computers, a camera, a smartphone and a server. Elements or modules of system 11, singly or in combination, can be embodied in a single integrated circuit (IC), multiple ICs, and/or discrete components. For example, in at least one embodiment, the system 11 comprises at least one processing module 200 that implement a training process for the NN implementing the ITM process. In various embodiments, the system 11 is communicatively coupled to one or more other systems, or other electronic devices, via, for example, a communications bus or through dedicated input and/or output ports.

The input to the processing module 200 can be provided through various input modules as indicated in block 231 already described in relation to Fig. 2C.

Various elements of system 11 can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the system 11, the processing module 200 is interconnected to other elements of said system 11 by the bus 2005.

The communication interface 2004 of the processing module 200 allows the system 11 to communicate on the communication channel 12. The communication channel 12 can be implemented, for example, within a wired and/or a wireless medium.

Data is streamed, or otherwise provided, to the system 11, in various embodiments, using a wireless network such as a Wi-Fi network, for example IEEE 802.11 (IEEE refers to the Institute of Electrical and Electronics Engineers). The Wi-Fi signal of these embodiments is received over the communication channel 12 and the communications interface 2004 which are adapted for Wi-Fi communications. The communications channel 12 of these embodiments is typically connected to an access point or router that provides access to external networks including the Internet for allowing streaming applications and other over-the-top communications. Still other embodiments provide streamed data to the system 11 using the RF connection of the input block 231. As indicated above, various embodiments provide data in a non-streaming manner.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented, for example, in a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), smartphones, tablets, and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, retrieving the information from memory or obtaining the information for example from another device, module or from user.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", "one or more of" for example, in the cases of "A/B", "A and/or B" and "at least one of A and B", "one or more of A and B" is intended to encompass the selection of the first listed option (A) only, or the selection of the second listed option (B) only, or the selection of both options (A and B). As a further example, in the cases of "A, B, and/or C" and "at least one of A, B, and C", "one or more of A, B and C" such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

As will be evident to one of ordinary skill in the art, implementations or embodiments can produce a variety of signals formatted to carry information that can be, for example, stored or transmitted. The information can include, for example, instructions for performing a method, or data produced by one of the described implementations or embodiments. For example, a signal can be formatted to carry a SDR content and metadata representing parameters of the NN implementing an ITM process of a described embodiment. Such a signal can be formatted, for example, as an electromagnetic wave (for example, using a radio frequency portion of spectrum) or as a baseband signal. The formatting can include, for example, encoding a SDR content with the metadata representing parameters of the NN implementing an ITM process in an encoded stream (i.e., in video data) and modulating a carrier with the encoded stream. The information that the signal carries can be, for example, analog or digital information. The signal can be transmitted over a variety of different wired or wireless links, as is known. The signal can be stored on a processor-readable medium.

Fig. 3 illustrates schematically an inverse tone mapping process for generating a HDR picture from a SDR picture based on a neural network.

The process of Fig. 3 is for example implemented by the processing module 200 of the system 13.

In a step 1330, the processing module 200 obtains a SDR content. The SDR content is for example a 2K (1920×1080), 4K (3840×2160) or 8K (7680×4320) SDR picture.

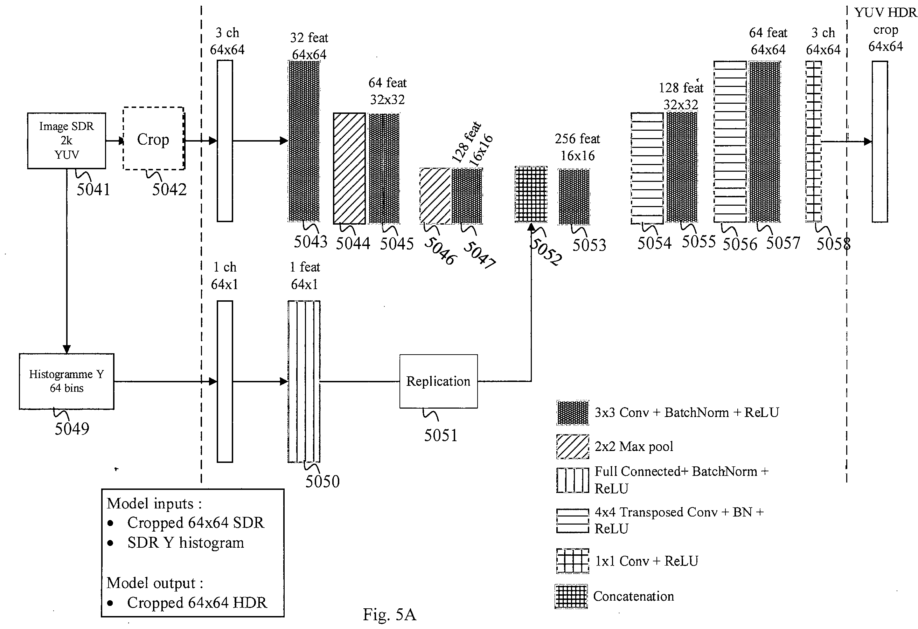

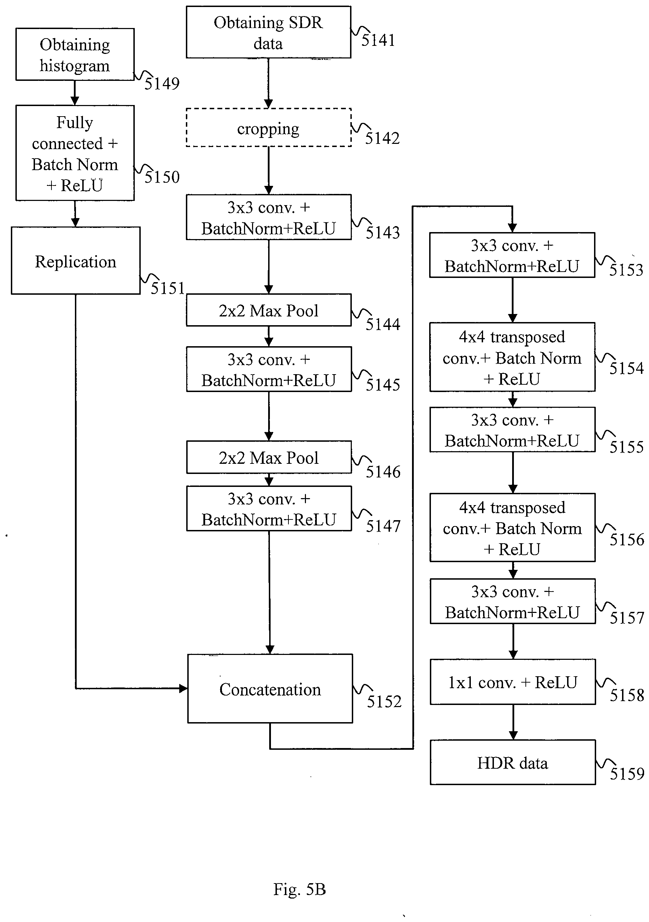

In a step 1331, the processing module 200 applies a NN based ITM process to the SDR picture to obtain a HDR picture. A NN implementing an ITM is illustrated in Fig. 5A. A NN based ITM process based on the NN of Fig. 5A is detailed below in relation to Fig. 5B. This NN comprises a concatenation of an array of samples representing the SDR picture to an array of samples representative of at least one statistical representation of the SDR picture.

In a step 1332, the processing module 200 of the system 13 provides the HDR picture to the display 15 so that the display 15 displays the HDR picture.

**Fig. 4** illustrates schematically a training process for determining parameters of the NN implementing the ITM process.

The training of the NN is for example executed by the processing module 200 of the system 11 during an offline process. During the training process, a database comprising a plurality of couples of picture data is obtained, each couple of picture data comprising a SDR version and a HDR version of same picture data. The process of Fig. 4 is iteratively applied on each couple of the database. Each iteration uses parameters of the NN updated at the previous iteration to compute a prediction of the HDR version of the couple from the SDR version using the NN based ITM process in course of training.

In a step 1140, the processing module 200 obtains a HDR version of a couple of the database.

In a step 1141, the processing module 200 obtains a corresponding SDR version of the same couple of the database.

In a step 1142, the processing module 200 applies the NN based ITM process with the NN parameters updated at the previous iteration to the SDR version to obtain the prediction of the HDR version. Again, the NN implementing the ITM is illustrated in Fig. 5A and the process for updating the NN parameters is explained below with reference to Fig. 5B. This NN comprises a concatenation of an array of samples representing the SDR version to an array of samples representative of at least one statistical representation of the SDR picture comprising the SDR version.

In a step 1143, the processing module 200 computes an error metric between the prediction of the HDR version and the HDR version of the couple.

In a step 1144, the processing module 200 uses the error metric in a back propagation process for updating the parameters of NN for the next iteration.

**Fig. 5A** illustrates schematically a NN used for implementing an inverse tone mapping process.

The NN of Fig. 5A comprises various modules described below.

A module 5043 implements a convolution stage to an input two-dimensional (2D) array of samples of size $N \times M$ based on a number $K$ of $3 \times 3$ convolution kernels allowing obtaining $K$ filtered samples for each 2D sample position of the input 2D array. In the following, we call *2D sample position* a position of a sample in a plan parallel to the plan of a SDR picture inputted to the NN. Therefore, all output samples resulting from the convolution of a same input sample by several convolution kernels have the same 2D sample position but are in different plans parallel to the plan of the SDR picture. The convolution stage is followed by a batch normalization and by a Rectified Linear Unit (ReLu) function. A batch normalization (also known as *batch norm*) is a method (proposed in *Ioffe, Sergey;* Szegedy, Christian (2015). "Batch Normalization: Accelerating Deep Network Training by Reducing Internal Covariate Shift*") used to make training of NN faster and more stable through normalization of the layers' inputs by re-centering and re-scaling.

The ReLu function is defined as follows:

$$ f(x) = \max(0, x) = \frac{x + |x|}{2} = \begin{cases} x \ if \ x > 0, \\ 0 \ Otherwise \end{cases} $$

where *x* is an input of the function.

A module 5044 implements a $2 \times 2$ max pooling. A $2 \times 2$ max pooling is a pooling operation that calculates the maximum value of a $2 \times 2$ patch of samples of an input 2D array and uses it to create an output array corresponding to a down-sampled (pooled) version of the input 2D array. Therefore, with an input array of size $N \times M \times K$, the output array has a size $(N/2) \times (M/2) \times K$.

A module 5045 implements a convolution stage based on a number $K \times 2$ of $3 \times 3 \times K$ convolution kernels allowing obtaining $K \times 2$ filtered samples for each 2D sample position of an input array followed by a batch normalization and by a ReLu function. The output array size is therefore $(N/2) \times (M/2) \times (K \times 2)$.

A module 5046 implements a $2 \times 2$ max pooling outputting an array of size $(N/4) \times (M/4) \times (K \times 2)$.

A module 5047 implements a convolution stage based on a number $K \times 4$ of $3 \times 3 \times (K \times 2)$ convolution kernels allowing obtaining $K \times 4$ samples for each 2D sample position of an input array followed by a batch normalization and by a ReLu function. The output array size is therefore $(N/4) \times (M/4) \times (K \times 4)$.

A module 5049 generates at least one statistical representation of a picture. For example, the module 5049 generates a histogram of a picture and represents this histogram by a 1D array with a size equal to the number of bins of the histogram.

A module 5050 implements a fully connected layer followed by a batch normalization and a Relu. Here the fully connected layer just connects all inputs of the module 5050 to all outputs of this module without reducing the number of samples per bin of the histogram.

A module 5051 implements a replication process. The replication process generates a 2D array from each sample of an input array outputted by the module 5050 by replicating the value of the sample at each 2D sample location of the 2D array. If the input array is a histogram comprising $B$ bins, $B$ 2D arrays are generated. We obtain then a 3D array of size $(N/4) \times (M/4) \times B$.

A module 5052 concatenates the output of the module 5047 and the output of the module 5051. The output of the module 5052 is a 3D array of size $(N/4) \times (M/4) \times (K \times 4 + B)$.

A module 5053 implements a convolution stage based on a number $K \times 8$ of $3 \times 3 \times (K \times 4 + B)$ convolution kernels allowing obtaining $K \times 8$ samples for each 2D sample position of an input array followed by a batch normalization and by a ReLu function. The output array size is therefore $(N/4) \times (M/4) \times (K \times 8)$.

A module 5054 implementing a transposed convolution based on a $4 \times 4$ convolution kernel followed by a batch normalization and by a ReLu function. The output array size is therefore $(N/2) \times (M/2) \times (K \times 4)$.

A module 5055 implementing a convolution stage based on a number $K \times 4$ of $3 \times 3 \times (K \times 4)$ convolution kernels allowing obtaining $K \times 4$ samples for each 2D sample position of an input array followed by a batch normalization and by a ReLu function. The output array size is therefore $(N/2) \times (M/2) \times (K \times 4)$.

A module 5056 implementing a transposed convolution based on a $4 \times 4$ convolution kernel followed by a batch normalization and by a ReLu function. The output array size is therefore $N \times M \times (K \times 2)$.

A module 5057 implementing a convolution stage based on a number $K \times 2$ of $3 \times 3 \times (K \times 2)$ convolution kernels allowing obtaining $K \times 2$ samples for each 2D sample position of the input array followed by a batch normalization and by a ReLu function. The output array size is therefore $N \times M \times (K \times 2)$.

A module 5058 implementing a convolution stage based on one $1 \times 1 \times (K \times 2)$ convolution kernel allowing obtaining one sample for each 2D sample position of the input array followed by a ReLu function. The output 2D array size is therefore $N \times M$.

**Fig. 5B** illustrates a block diagram of an example of process implementing an inverse tone mapping process based on the NN of Fig. 5A.

Fig. 5B illustrates two aspects of the process implementing the ITM process based on the NN of Fig. 5A: a process for updating the NN parameters used during the training of the NN and the use of the trained NN to apply an ITM to SDR picture data.

In an embodiment, the training process and the ITM process are applied on luminance components Y of YUV pictures. The chrominance components U and V of the HDR picture are deduced from the luminance component Y. For instance, if the luminance component of a sample of the HDR picture is $Y_{HDR}$ and the luminance component of a corresponding sample of the SDR picture is $Y_{SDR}$, the chrominance components $U_{HDR}$ and $V_{HDR}$ of the sample of the HDR picture is computed as follows:

$$U_{HDR} = U_{SDR} \times \frac{Y_{HDR}}{Y_{SDR}}$$

$$V_{HDR} = V_{SDR} \times \frac{Y_{HDR}}{Y_{SDR}}$$

where $U_{SDR}$ and $V_{SDR}$ are respectively the chrominance components of the corresponding sample of the SDR picture.

Training of the NN:

The process of Fig. 5B when illustrating the training of the NN corresponds to a detailed version of the process of Fig. 4. In an embodiment, each luminance component Y of a picture of the database is divided into blocks of size $N \times M = 64 \times 64$. The picture data of Fig. 4 are therefore $64 \times 64$ blocks of a luminance component of a SDR picture. The training process is therefore applied to each couple of a $64 \times 64$ block of luminance component of a SDR picture and a $64 \times 64$ block of luminance component of a HDR picture of the database. Processing $64 \times 64$ blocks instead of full pictures allows better capturing local characteristics of a picture but also, to parallelize the processing of a plurality of blocks of a picture. In addition, in the example of Fig. 5B, the initial number of convolution kernels $K = 32$ and the number of bins of the histogram $B = 64$.

In a step 5141, the processing module 200 obtains a luminance component of an input SDR picture.

In a step 5142, the processing module 200 crops a $64 \times 64$ block of the luminance component of the input SDR picture. During the training process, all 64×64 blocks of the luminance component of the input SDR picture are cropped and processed successively or in parallel.

In a step 5143, the processing module 200 applies to the 64×64 block the convolution stage followed by the batch normalization and the ReLu function implemented by the module 5043. The output of step 5143 is an array of size 64×64×32.

In a step 5144, the processing module 200 applies the 2×2 max pooling process implemented by the module 5044 to the output of step 5143. The output of step 5144 is an array of size 32×32×32.

In a step 5145, the processing module 200 applies to the array resulting from step 5144 the convolution stage followed by the batch normalization and the ReLu function implemented by the module 5045. The output of step 5145 is an array of size 32×32×64.

In a step 5146, the processing module 200 applies the 2×2 max pooling process implemented by the module 5046 to the array resulting from step 5145. The output of step 5146 is an array of size 16×16×64.

In a step 5147, the processing module 200 applies to the array resulting from step 5146 the convolution stage followed by the batch normalization and the ReLu function implemented by the module 5047. The output of step 5147 is an array of size 16×16×128.

In a step 5149, the processing module 200 obtains a statistical representation of the luminance component of an input SDR picture. In the example of Fig. 5B, the processing module 200 obtains a histogram of the input SDR picture comprising B=64 bins. During step 5149, the histogram is represented by a 1D array of size "64".

In a step 5150, the processing module 200 applies the fully connected layer implemented by the module 5050 to the array resulting from step 5149. The output of step 5150 is a 1D array of size "64".

In a step 5151, the processing module 200 applies the replication process implemented by the module 5051 to the array resulting from step 5150. The output of step 5151 is a 3D array of size 16×16×64.

In a step 5152, the processing module 200 concatenates the array outputted by the module 5047 with the array outputted by the module 5051 applying the process implemented by the module 5052. In other words, the processing module 200 concatenates an array of samples representing the 64×64 block of the luminance component of the input SDR picture cropped in step 5042 to an array of samples representing a statistical representation of the luminance component of the input SDR picture. The output of step 5152 is an array of size 16×16×(128+64).

In a step 5153, the processing module 200 applies to the array resulting from step 5152 the convolution stage followed by the batch normalization and the ReLu function implemented by the module 5053. The output of step 5153 is an array of size 16×16×256.

In a step 5154, the processing module 200 applies the transposed convolution followed by the batch normalization and the ReLu function implemented by the module 5054 to the array resulting from step 5153. The output of step 5154 is an array of size 32×32×128.

In a step 5155, the processing module 200 applies to the array resulting from step 5154 the convolution stage followed by the batch normalization and the ReLu function implemented by the module 5055. The output of step 5155 is an array of size 32×32×128.

In a step 5156, the processing module 200 applies the transposed convolution followed by the batch normalization and the ReLu function implemented by the module 5056 to the array resulting from step 5155. The output of step 5156 is an array of size 64×64×64.

In a step 5157, the processing module 200 applies to the array resulting from step 5156 the convolution stage followed by the batch normalization and the ReLu function implemented by the module 5057. The output of step 5157 is an array of size 64×64×64.

In a step 5158, the processing module 200 applies to the array resulting from step 5157 the convolution stage followed by the ReLu function implemented by the module 5058. The output of step 5158 is an array of size 64×64 representing a prediction of the 64×64 HDR block corresponding to the 64×64 SDR block obtained in step 5141.

In a step 5159, the processing module 200 computes an error metric between the prediction of the 64×64 HDR block and the 64×64 HDR block. For example, the error metric is a Sum of Absolute Difference (SAD) or a Sum of Squared Difference (SSD). The error metric is used in a back propagation process to update the NN parameters for the next 64×64 SDR block of the database.

The output of the training process is a trained NN implementing an ITM process. The so trained parameters of the NN are provided to the system 13 so that the system 13 can implement the NN based ITM process.

In a variant of the training process illustrated by Fig. 5B, the cropping step 5142 can be cancelled, and step 5143 is applied directly to the SDR picture. In that case, N and M represent the dimensions of the SDR picture.

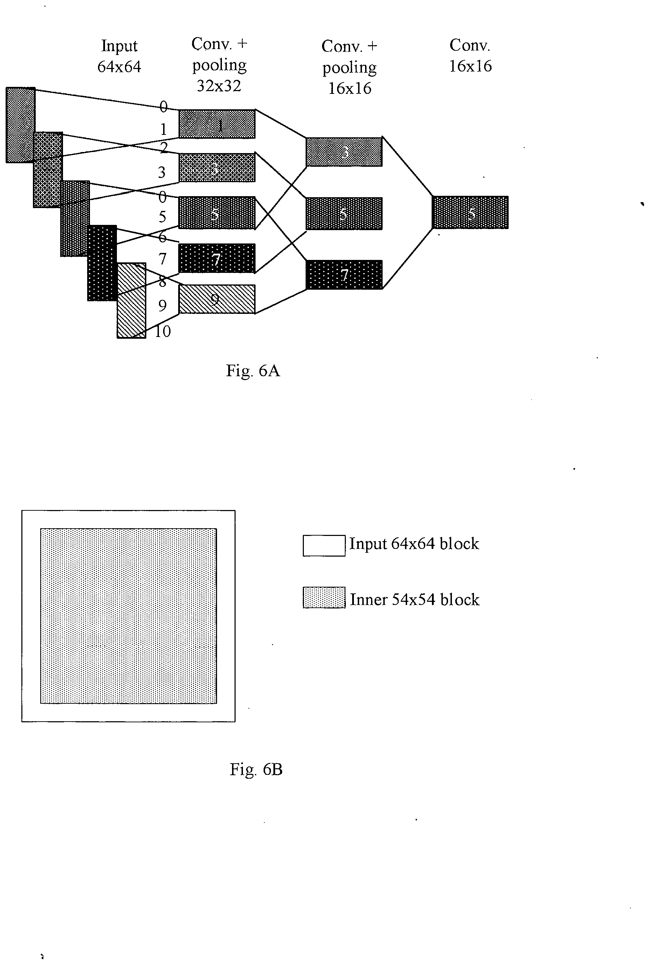

Since the convolution filters dimension is 3×3, as represented in **Fig. 6A,** the value of a sample after two convolution layers followed by a factor two pooling and a final convolution layer, depends on the samples of a 10×10 area (also called receptive field) in the original input block, whatever its size. Fig. 6A shows that the sample at row #5 in the final stage is dependent from input samples at rows #0 to #10 in the original input. Hence, the inner samples located in a 54×54 block in the center of an original 64×64 block, as represented in Fig. 6B are perfectly computed without border effects. In a variant, in the case of a $64 \times 64$ input block, the error metric is computed only on the inner $54 \times 54$ block in step 5159. In that variant, the inner samples used in the computation the error metric depend therefore on the characteristics of the convolution filters and on the characteristics of the sub-sampling processes (here implemented by a $2 \times 2$ max pooling) comprised in the NN.

Inverse tone mapping of a SDR picture:

The inverse tone mapping of a picture using the NN of Fig. 5A is for example executed by the processing module 200 of the system 13 during a streaming session. During the streaming session, the processing module receives a sequence of SDR pictures and applies the ITM process based on the NN of Fig. 5A to each received SDR picture.

In an embodiment, the processing module 200 of the system 13 applies the NN of Fig. 5A to the luminance component Y of each received SDR picture. As can be seen, in this embodiment, while the NN was applied to blocks of the SDR pictures during the training process, when applying the ITM, full SDR pictures are inputted to the NN.

The ITM process applies the process of Fig. 5B. However, during the ITM process, no cropping step 5142 is applied and in step 5149, no error metric is computed. One can note that, in the case of the ITM process, the process of Fig. 5B corresponds to steps 1330 and 1331 of the process of Fig. 3.

The output of the process of Fig. 5B when implementing the ITM process applied to a luminance component of an input SDR picture is therefore a luminance component of an HDR picture, chrominance components being deduced from the luminance component.

Until now, we have considered that only the luminance component Y of the SDR pictures was considered in the training process and in the ITM process, the chrominance components U and V being derived from the luminance component Y. In another embodiment, each component Y, U and V is successively inputted to the NN in the training process and in the ITM process. In this embodiment, the output of the training process is three sets of NN parameters, one for each component. The ITM process is applied successively on each component of an input SDR picture using the NN parameters trained specifically for this component.

In addition, the NN of Fig. 5A is designed to process a 2D array of SDR samples, which implies either to apply the NN to the luminance component of a SDR picture and to deduce the chrominance components of the HDR picture from the luminance component of the HDR picture obtained using the NN or to apply the NN independently to each component of a SDR picture. In an embodiment, the NN is designed to process 3D arrays of SDR samples comprising three sample values for each 2D sample location. In that case, the $3 \times 3$ convolutions kernels used in module 5043 are replaced by $3 \times 3 \times 3$ convolutions kernels and the $1 \times 1 \times (K \times 2)$ convolution kernel used by module 5058 is replaced by three $1 \times 1 \times (K \times 2)$ convolution kernels, one for each component.

We have also seen that, in the above embodiments, during the training, each luminance component of a SDR picture of the database is divided into blocks of size $N \times M = 64 \times 64$. In another variant, other sizes of blocks could be used such as $128 \times 128$, $32 \times 32$, $128 \times 64$, $64 \times 128$, etc.

We have also seen in an embodiment of the training process that full SDR pictures can be processed (step 5042 is skipped) instead of blocks.

Similarly, in another embodiment, instead of processing a full picture, during the ITM process, the SDR picture is divided into blocks of size $N \times M$ (step 5042 is enabled), and the ITM process is applied to each block of a SDR picture successively or in parallel.

In another embodiment, other values of $K$ and $B$ are possible, for example $K=64$ or $K=16$ and $B=128$ or $B=256$.

In the example of Fig. 5A, the NN comprises two analysis blocks composed of a $2 \times 2$ max pooling module and a module implementing a convolution stage followed by a batch normalization and by a ReLu function (5044+5045 and 5046+5047) and two synthesis blocks composed of a module implementing a transposed convolution followed by a batch normalization and by a ReLu function and a module implementing a convolution stage followed by a batch normalization and by a ReLu function (5054+5055 and 5056+5057). In an embodiment, the number of analysis and synthesis blocks is different from two and for example equal to "4", "3" or "1".

Furthermore, in the example the NN of Fig. 5A, the statistical representation of the SDR picture is a single histogram of the SDR picture. In other embodiments, several histograms of various granularities (i.e., various number of bins) could be used. Other types of statistical representation could be also used. For example, the statistical information could be a cumulative histogram of the SDR picture or an array of variances or of averages of $N \times M$ blocks of the SDR pictures or any combination of several statistical representations.

In an embodiment, each $2 \times 2$ max pooling step is replaced by a step of calculating an average or a median of the samples of the $2 \times 2$ patch.

In an embodiment, the training process and the ITM process are both executed by the system 11. In that case, a HDR content generated from a SDR content by the system 11 is transmitted to the system 13.

We described above a number of embodiments. Features of these embodiments can be provided alone or in any combination. Further, embodiments can include one or more of the following features, devices, or aspects, alone or in any combination, across various claim categories and types:

- A TV, set-top box, cell phone, tablet, personal computer or other electronic device that performs at least one of the embodiments described, and that displays (e.g., using a monitor, screen, or other type of display) a resulting picture.
- A TV, set-top box, cell phone, tablet, personal computer or other electronic device that tunes (e.g., using a tuner) a channel to receive a signal including an encoded SDR video and performs at least one of the embodiments described.
- A TV, set-top box, cell phone, tablet, or other electronic device that receives (e.g., using an antenna) a signal over the air that includes an encoded SDR video and performs at least one of the embodiments described.
- A server, camera, cell phone, tablet, personal computer or other electronic device that performs at least one of the embodiments described to generate a HDR content from a SDR content and that transmits (e.g., using an antenna) a signal over the air that includes the HDR content.
- A server, camera, cell phone, tablet, personal computer or other electronic device that tunes (e.g., using a tuner) a channel to transmit a signal including a SDR video and metadata representing parameters of a NN implementing an ITM process, and performs at least one of the embodiments described.
- A server, camera, cell phone, tablet, personal computer or other electronic device that transmits (e.g., using an antenna) a signal over the air that includes a SDR video and metadata representing parameters of a NN implementing an ITM process, and performs at least one of the embodiments described.

**Claims**

1. A method comprising:

    obtaining (1330) standard dynamic range (SDR) picture data; and,
    applying (1331) a neural network implementing an inverse tone mapping process to the SDR picture data to obtain high dynamic range (HDR) picture data, wherein the neural network comprises a concatenation of an array of samples representing the SDR picture data to an array of samples representative of at least one statistical representation of the SDR picture data.

2. The method of claim 1 wherein, the SDR picture data is a full SDR picture and the HDR picture data is a full HDR picture.

3. A method comprising:

    obtaining (1140, 1141) a couple of picture data comprising a standard dynamic range (SDR) version and a high dynamic range (HDR) version of same picture data;
    applying (1142) a neural network implementing an inverse tone mapping process to the SDR version to obtain a prediction of the HDR version, the neural network comprising a concatenation of an array of samples representing the SDR version to an array of samples representative at least one statistical representation of the SDR version;
    computing (1143) an error metric between the prediction of the HDR version and the HDR version; and
    using (1144) the error metric in a back propagation process for updating parameters of the neural network.

4. A method comprising:

    obtaining a database of a plurality of couples of pictures, each couple of pictures comprising a standard dynamic range (SDR) version and a high dynamic range (HDR) version of a same picture;
    dividing each picture of the database in blocks of samples to obtain a plurality of couples of a SDR version and a HDR version of a same block of samples; and,
    applying iteratively the method of claim 3 to each couple of the plurality of couples of a SDR version and a HDR version of a same block of samples to determine the parameters of the neural network, the parameters of the neural network updated at an iteration being used for the next iteration.

5. The method of claim 4 wherein, the computing of the error metric involves samples of a sub-part of the prediction of the HDR version and samples of a corresponding sub-part of the HDR version, each sub-part depending on characteristics of at least one among at least one convolution process and at least one sub-sampling process comprised in the neural network.

6. The method of any previous claim wherein, the at least one statistical representation comprises a histogram of a SDR picture comprising the SDR picture data.

7. A device comprising electronic circuitry configured for:

obtaining (1330) standard dynamic range (SDR) picture data; and,
applying (1331) a neural network implementing an inverse tone mapping process to the SDR picture data to obtain high dynamic range (HDR) picture data, wherein the neural network comprises a concatenation of an array of samples representing the SDR picture data to an array of samples representative of at least one statistical representation of the SDR picture data.

8. The device of claim 7 wherein, the SDR picture data is a full SDR picture and the HDR picture data is a full HDR picture.

9. A device comprising electronic circuitry configured for:

obtaining (1140, 1141) a couple of picture data comprising a standard dynamic range (SDR) version and a high dynamic range (HDR) version of same picture data;
applying (1142) a neural network implementing an inverse tone mapping process to the SDR version to obtain a prediction of the HDR version, the neural network comprising a concatenation of an array of samples representing the SDR version to an array of samples representative at least one statistical representation of the SDR version;
computing (1143) an error metric between the prediction of the HDR·version and the HDR version; and
using (1144) the error metric in a back propagation process for updating parameters of the neural network.

10. A device comprising electronic circuitry configured for:

obtaining a database of a plurality of couples of pictures, each couple of pictures comprising a standard dynamic range (SDR) version and a high dynamic range (HDR) version of a same picture;
dividing each picture of the database in blocks of samples to obtain a plurality of couples of a SDR version and a HDR version of a same block of samples; and;
applying an iterative process to the plurality of couples of a SDR version and a HDR version of a same block of samples to determine parameters of a neural network implementing an inverse tone mapping process, parameters of the neural network updated at an iteration being used for the next iteration, the iterative process comprising for a couple of the plurality of couples of a SDR version and a HDR version of a same block of samples in one iteration:

applying (1142) the neural network implementing the inverse tone mapping process to the SDR version of the couple to obtain a prediction of the HDR version of the couple, the neural network comprising a concatenation of an array of samples representing the SDR version of the couple to an array of samples representative at least one statistical representation of the SDR version of the couple;
computing (1143) an error metric between the prediction of the HDR version of the couple and the HDR version of the couple; and
using (1144) the error metric in a back propagation process for updating parameters of the neural network.

11. The device of claim 10 wherein, the computing of the error metric involves samples of a sub-part of the prediction of the HDR version and samples of a corresponding sub-part of the HDR version, each sub-part depending on characteristics of at least one among at least one convolution process and at least one sub-sampling process comprised in the neural network.

12. The device of any previous claim from claim 7 to 11 wherein, the at least one statistical representation comprises a histogram of a SDR picture comprising the SDR picture data.

13. Non-transitory information storage medium storing program code instructions for implementing the method according to any previous claim from claim 1 to 6.

14. A computer program comprising program code instructions for implementing the method according to any previous claim from claim 1 to 6.

Fig. 1

| 2000 | | 2001 | | 2002 |
| CPU | | RAM | | ROM |

2005

| 2003 | | 2004 |

200

Fig. 2A

RF, COMP,
USB, HDMI

231

2005

200

11

12

Communication channel

Fig. 2B

15     235     236

| Display | Speakers | Peripherals |

| RF, COMP, USB, HDMI | Display Interface | Audio Interface | Peripheral Interface |

231     232     233     234

2005

200

13

Communication channel      12

Fig. 2C

Obtaining
SDR ∿1330

↓

ITM ∿1331

↓

display ∿1332

Fig. 3

Obtaining
HDR ∿1140

↓

Obtaining
SDR ∿1141

↓

applying
ITM ∿1142

↓

Error
metric ∿1143

↓

Back
propagation ∿1144

Fig. 4

EP 4 636 684 A1

YUV HDR
crop
64x64

3 ch
64x64

32 feat
64x64

64 feat
32x32

64 feat
64x64

3 ch
64x64

128 feat
32x32

128 feat
16x16

256 feat
16x16

Image SDR
2k
YUV

Crop

5041    5042

5043  5044  5045   5046  5047   5052  5053   5054 5055 5056 5057   5058

1 ch
64x1

1 feat
64x1

Histogramme Y
64 bins

Replication

5049

5051

5050

Model inputs :
• Cropped 64x64 SDR
• SDR Y histogram

Model output :
• Cropped 64x64 HDR

3x3 Conv + BatchNorm + ReLU

2x2 Max pool

Full Connected + BatchNorm + ReLU

4x4 Transposed Conv + BN + ReLU

1x1 Conv + ReLU

Concatenation

Fig. 5A

Fig. 5B

Input
64x64

Conv. +
pooling
32x32

Conv. +
pooling
16x16

Conv.
16x16

0
1
2
3
0
5
6
7
8
9
10

Fig. 6A

Input 64x64 block

Inner 54x54 block

Fig. 6B

# EUROPEAN SEARCH REPORT

Europäisches
Patentamt
European
Patent Office
Office européen
des brevets

**Application Number**

EP 24 31 5188

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHAO TONG ET AL: "Hybrid Conditional Deep Inverse Tone Mapping", PROCEEDINGS OF THE GENETIC AND EVOLUTIONARY COMPUTATION CONFERENCE, ACMPUB27, NEW YORK, NY, USA, 10 October 2022 (2022-10-10), pages 1016-1024, XP059280095, DOI: 10.1145/3503161.3548129 ISBN: 978-1-4503-9268-6 * Sections 1, 3. * | 1-14 | INV. G06T5/90 G06T5/60 |
| X | CHEN XIANGYU ET AL: "HDRUNet: Single Image HDR Reconstruction with Denoising and Dequantization", 2021 IEEE/CVF CONFERENCE ON COMPUTER VISION AND PATTERN RECOGNITION WORKSHOPS (CVPRW), IEEE, 19 June 2021 (2021-06-19), pages 354-363, XP033967383, DOI: 10.1109/CVPRW53098.2021.00045 [retrieved on 2021-08-25] * Sections 1, 3. * | 1-14 | |
| A | DEMETRIS MARNERIDES ET AL: "ExpandNet: A Deep Convolutional Neural Network for High Dynamic Range Expansion from Low Dynamic Range Content", ARXIV.ORG, CORNELL UNIVERSITY LIBRARY, 201 OLIN LIBRARY CORNELL UNIVERSITY ITHACA, NY 14853, 6 March 2018 (2018-03-06), XP080858370, * Sections 1, 3. * | 1-14 | **TECHNICAL FIELDS SEARCHED (IPC)** G06T G06V |

The present search report has been drawn up for all claims

| Place of search | Date of completion of the search | Examiner |
|---|---|---|
| The Hague | 3 September 2024 | Hardell, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021175633 A1

**Non-patent literature cited in the description**

- **Y.KINOSHITA.** *Fast Inverse Tone Mapping with Reinhard's Global Operator*, 2017
- **KINOSHITA, Y.** *iTM-Net: Deep Inverse Tone Mapping Using Novel Loss Function Based on Tone Mapping Operator.*, 2019
- **KIM, SOO YE.** *Deep SR-ITM Joint Learning of Super-Resolution and Inverse Tone-Mapping for 4K UHD HDR Applications.*, 2019
- **SZEGEDY, CHRISTIAN**. *Batch Normalization: Accelerating Deep Network Training by Reducing Internal Covariate Shift*, 2015